Europäisches Patentamt

European Patent Office

Office européen des brevets

(19)

(11) **EP 0 828 240 B1**

(12) **EUROPEAN PATENT SPECIFICATION**

(45) Date of publication and mention
of the grant of the patent:
**13.08.2003 Bulletin 2003/33**

(51) Int Cl.⁷: **G10L 17/00**

(21) Application number: **97301910.2**

(22) Date of filing: **20.03.1997**

(54) **Control device for controlling the starting of a vehicle by means of a voice**

Kontrollvorrichtung zur Startkontrolle eines Fahrzeugs mittels Stimme

Dispositif de commande du démarrage d'un véhicule par la voix

(84) Designated Contracting States:
**CH DE ES FR GB IT LI NL**

(30) Priority: **27.08.1996 KR 9635864**

(43) Date of publication of application:
**11.03.1998 Bulletin 1998/11**

(73) Proprietor: **Samsung Electronics Co., Ltd.
Suwon-city, Kyungki-do (KR)**

(72) Inventor: **Lee, See-Woo
Bundang-Ku, Sungnam-Si, Kyungki-Do (KR)**

(74) Representative: **Chugg, David John et al
Appleyard Lees,
15 Clare Road
Halifax, West Yorkshire HX1 2HY (GB)**

(56) References cited:
WO-A-87/02773          WO-A-94/22132
US-A- 4 706 072

• HAYRE H S: "Electronics surveillance of oil field workers/helicopter pilots for drug/alcohol use" PROCEEDINGS OF THE IEEE 1986 REGION 5 CONFERENCE (CAT. NO.86CH2304-4), LAFAYETTE, LA, USA, 8 - 11 April 1986, pages 26-29, XP002079166 IEEE, New York, NY, USA
• KLINGHOLZ F ET AL: "Recognition of low-level alcohol intoxication from speech signal" JOURNAL OF THE ACOUSTICAL SOCIETY OF AMERICA, SEPT. 1988, USA, vol. 84, no. 3, pages 929-935, XP002079167 ISSN 0001-4966

## Description

The present invention concerns a control device for controlling the starting of a vehicle by means of a voice and more particularly to a control device for controlling the start of a vehicle engine according to the result of sensing a driver's voice.

At present voice recognition technology is applied not only to the fields of phones, vehicles, automatic switching systems, computers, voice recognition word processors and toys but also to the fields of social welfare such as supplementary terminals for disabled people, and has a tendency of spreading to all fields of society generally.

By utilizing voice recognition technology, a user of any equipment or a machine can have a convenient means to operate them without manual manipulation. For example, a driver can start his own vehicle simply by means of speaking a word such as 'start'.

However, as well as providing convenience to users there can also be adverse effects. For example, whilst a vehicle may be started simply by a driver's speaking the word 'start', there is no means for judging whether the driver is in a fit state to drive the vehicle. Accordingly, far from being a convenience, when a driver is in a drunken state, voice recognition for starting a car engine may be a cause of a car accident.

WO-A-87/02773 discloses a system for breath signature characterisation which generates a breath signature signal for a person who delivers a breath sample to a breath sampler. The sampler senses each of temperature, pressure and humidity of the breath sample and may also generate a frequency spectrum from the sound of the breath sample. The breath signature signal is stored and can be used to later recognise a person giving a sample. Optionally, the breath sampler is linked to a drug sensing unit for sensing the presence of a drug such as alcohol.

Klingholz, F. et al. in the paper "Recognition of low-level alcohol intoxication from speech signal" published in the Journal of the Acoustical Society of America, September 1998, Vol.84, no. 3, pages 929-935, EX002079167 ISSN001-4967 reports the results of an experiment to detect low-level alcohol intoxication by analysis of speech.

It is an aim of preferred embodiments of the present invention as claimed in the appended claims to provide a control device for starting a vehicle by means of voice recognition only in case of a driver being in a sober condition.

It is an another aim of embodiments of the present invention to provide a control device for starting a vehicle which prevents a vehicle from starting when it is sensed from a drivers voice that he/she has been drinking.

It is still another aim of embodiments of the present invention to provide a sensing device for analyzing a driver's voice to check if he/she has been drinking.

It is a further aim of embodiments of the present invention to provide a control device which controls vehicle starting so as to protect a driver's life and property by preventing a car accident from occurring.

According to a first aspect of the invention, there is provided a control device for controlling the starting of a vehicle, characterized by starting or shutting off a vehicle from starting according to the result of analyzing the sound of a driver issued voice command to judge whether the driver is in a fit to drive condition.

Preferably, said device prevents a vehicle from starting and simultaneously sends a warning message to the driver in cases where the driver is judged as not being in a fit state to drive.

Preferably, the voice command is analyzed to judge whether the driver has been drinking.

Preferably, the device comprises: a parameter extractor for producing a parameter corresponding to a linear prediction coefficient-cepstrum coefficient extracted from a digital signal obtained by converting the sound of said voice command; a decision circuit for comparing said parameter with a reference parameter obtained from the voice of said driver when in a fit to drive condition so as to decide whether said driver is fit to drive or not; and a controller for starting or not according to whether said driver is determined to be fit to drive.

The device may further include a warning message sender for giving a warning to said driver in case of said driver being found to be in an unfit to drive condition.

The parameter extractor preferably generates said linear prediction coefficient-cepstrum coefficient after producing a linear prediction coefficient by taking an auto-correlation on the digital voice signal.

Said decision circuit preferably sends a code representing the result of the comparison to said controller or to said warning message sender.

Preferably, said decision circuit comprises a comparator for comparing said parameter with a reference parameter obtained from the voice of said driver when in a state fit to drive to generate a difference signal representing a deviation, and a code sender for sending a code to said warning message sender or controller according to whether said deviation is above a reference value or not.

Preferably, said warning message sender comprises a voice synthesizer for synthesizing a voiced warning in response to a code representing that the said driver is drunk, and a speaker for giving out said voiced warning.

According to a second aspect of the invention, there is provided a device for sensing whether or not a driver is in a fit state by analyzing his voice, the device comprising: a parameter extractor for producing a parameter corresponding to a linear prediction coefficient-cepstrum coefficient extracted from a digital signal obtained by converting the sound of said voice command;

a storage means for storing a reference parameter extracted from the voice of said driver when said drive is in a fit condition; a comparator for comparing a current parameter extracted by said extractor with said reference parameter so as to produce a difference signal representing the deviation; and a decision circuit for determining said driver to be in a fit state or not according to whether said deviation is above a reference value or not.

Said parameter extractor preferably generates said linear prediction coefficient-cepstrum coefficient after producing a linear prediction coefficient by taking an auto-correlation on the digital voice signal.

Preferably, the device detects whether or not the driver has been drinking.

According to aspects of the present invention, there is provided a device for sensing the condition of a driver by analyzing his voice, the device comprising a parameter extractor for producing a parameter corresponding to a linear prediction coefficient-cepstrum coefficient extracted from a digital signal obtained by converting the sound of a voice command, a storage means for storing a reference parameter extracted from the voice of the driver when in a sober condition, a comparator for comparing a current parameter extracted by the extractor with the reference parameter so as to produce a difference signal representing the deviation, and a decision circuit for determining whether the driver is sober or drunk according to whether the deviation is above or below a reference value. The parameter extractor preferably generates the linear prediction coefficient-cepstrum coefficient after producing a linear prediction coefficient by taking an auto-correlation on the digital voice signal.

According to another aspect of the present invention, a control device for controlling vehicle starting by means of a voice command of a driver, comprises a parameter extractor for producing a parameter corresponding to a linear prediction coefficient-cepstrum coefficient extracted from a digital signal obtained by converting the sound of the voice command, a decision circuit for comparing the parameter with a reference parameter obtained from the voice of the driver when in a sober condition so as to decide whether the driver is sober or drunk, and a controller for starting or not according to whether the driver is determined to be sober or drunk. A warning message sender is provided for giving a warning to the driver in case of the driver being found to be drunk.

The parameter extractor preferably generates the linear prediction coefficient-cepstrum coefficient after producing a linear prediction coefficient by taking an auto-correlation on the digital voice signal. The decision circuit preferably comprises a comparator for comparing the parameter with a reference parameter obtained from the voice of the driver when sober to generate a difference signal representing a deviation, and a code sender for sending a code to the warning message sender or controller according to whether the deviation is above a reference value or not. A warning message sender preferably comprises a voice synthesizer for synthesizing a voiced warning in response to the code representing that the driver is drunk, and a speaker for giving out the voiced warning.

Thus, embodiments of the inventive control device aim to prevent drivers from operating vehicles when drunk and thereby prevent accidents due to drunk driving.

For a better understanding of the invention, and to show how embodiments of the same may be carried into effect, reference will now be made, by way of example, to the accompanying diagrammatic drawings, in which:

Figure 1 is a schematic diagram for illustrating a configuration of a control device for controlling vehicle starting according to an embodiment of the present invention;

Figures 2A and 2B are charts for illustrating the value of a linear prediction coefficient- cepstrum coefficient method in showing the driver to be drunk or not drunk according to coefficient extracted by a parameter extractor;

Figures 3A and 3B are graphs for illustrating how a distribution of a linear prediction coefficient- cepstrum coefficient method varies according to whether a driver is drunk; and

Figure 4 is a flow chart for illustrating the operation of a control device for starting a vehicle by sensing the result of a driver's drinking state according to embodiments of the present invention.

First of all, it is to be noted that like elements of a given configuration are given the same reference numerals throughout the drawings.

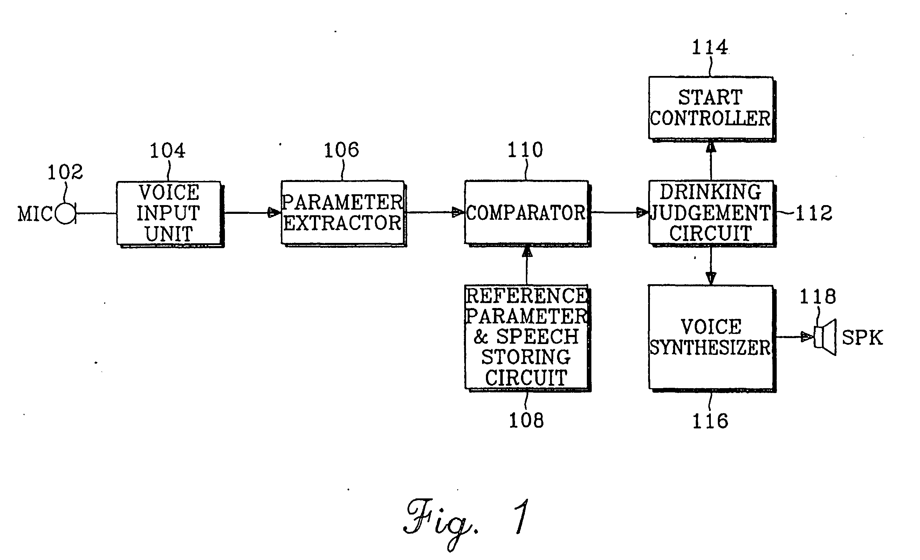

Referring to Figure 1, a control device for starting a vehicle by means of a voice command includes a device for sensing whether a driver has been drinking, the device comprising a microphone 102, a voice input unit 104, a parameter extractor 106, a reference parameter & voice storing circuit 108, a comparator 110 and a control device for controlling a vehicle start comprising a start controller 114, a voice synthesizer 116, and a speaker 118.

The microphone 102 (such as a directional type microphone) performs the function of entering a driver's voice command into the voice input unit 104. The microphone 102 is installed in the interior of the vehicle so as to readily enable the input of a driver's voice. The voice input unit 104 comprises an amplifier for amplifying the voice from the microphone 102 to a predetermined level and an analog/digital converter for converting the output from the amplifier to a digital signal. The parameter extractor 106 generates a parameter as a result of analyzing the digital voice signal from the voice input unit 104. The parameter is the element for judging a driver to be drunk or not and a linear prediction coefficient(hereinafter referred to as 'LPC')-cepstrum coefficient is utilized as the parameter in the described embodiments of the present invention.

The parameter extractor 106 extracts the LPC from the voice signal after processing the digital voice signal from the voice input unit 104 in a predetermined frame unit by means of an auto correlation. By the method for taking a spectrum decomposition from a predicted value and error obtained by applying a linear operation on the sampled value of a stationary stochastic process, the LPC is acquired. The parameter extractor 106 generates an output as a parameter after acquiring a cepstrum coefficient from the LPC. The cepstrum coefficient is obtained by performing a reverse Fourier conversion of a power spectrum obtained by performing a Fourier conversion of an LPC of a voice signal. The comparator 110 compares the LPC-cepstrum coefficient(hereinafter referred to as 'parameter') generated from the parameter extractor 106 with the reference parameter stored in the reference parameter & voice storing circuit 108. The reference parameter is a parameter produced formerly from the parameter extractor 106 when the driver is not drunk. The comparator 110 calculates a variation between the parameter and the reference parameter. Further, the reference parameter & voice storing circuit 108 contains parameters for a predetermined voice.

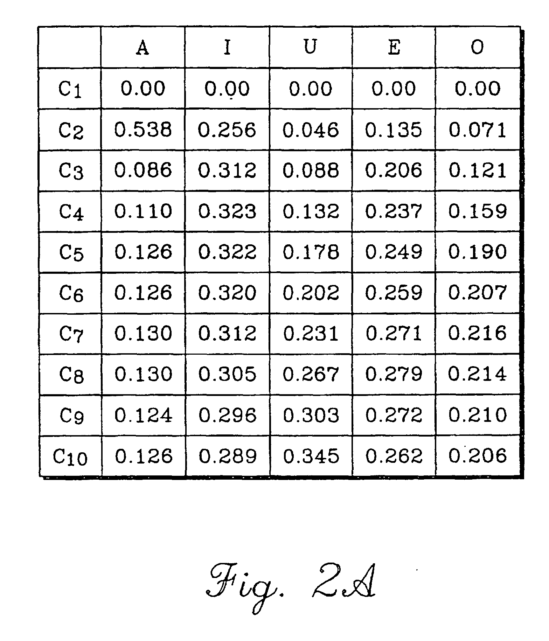

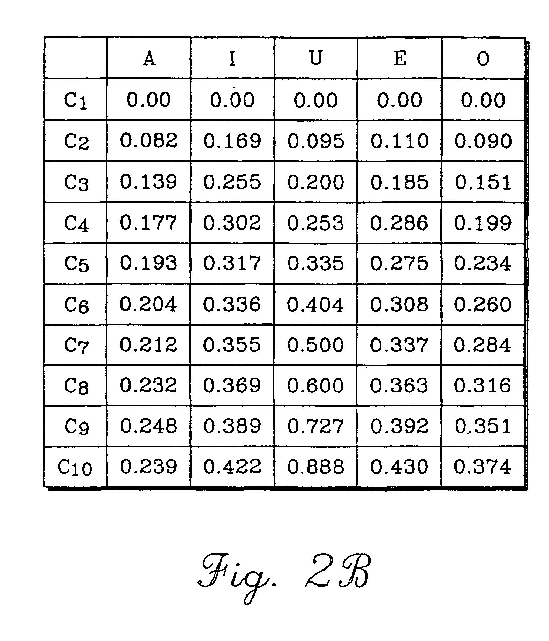

The drinking judgement circuit 112 sends a code to the start controller 114 indicating a judgement that a driver is not drunk when the variation output from the comparator is not more than a preset command value and, in a case where the variation is more than a command value, a code is sent to the voice synthesizer 116. The start controller 114 starts a vehicle, corresponding to a code indicating that a driver is not drunk. The voice synthesizer 116 sends a warning message through the speaker 118 to a driver by synthesizing a voice stored in the reference parameter & voice storing circuit 108, corresponding to a code indicating that a driver is drunk. The warning message may for instance be worded as 'Please don't drink and drive as you are putting your life and property at risk'. Figure 2A is a chart for illustrating parameters corresponding to a voice of a driver being not drunk and Figure 2B is a chart for illustrating parameters corresponding to a voice of a driver being drunk. The LPC-cepstrum coefficient is calculated by a formula described as follows:

$$C1 = -\alpha 1.$$

$$C_n = -\alpha \left(1 - \sum_{i=1}^{n-1} \frac{i}{n}\right) \alpha_i C_{n-i}$$

In the formula, "$\alpha$" represents a LPC-cepstrum coefficient and "n" a degree. Normally the number of degree is to be set somewhere between 8 and 10, and it is noted that the present invention is described by setting the degree of a parameter at 10.

Figures 2A and 2B illustrate the 10 degrees of parameters corresponding to each vowel sound of 'a','i', 'u','e',and 'o'. Referring to Figs. 2A and 2B, there is shown a difference between the parameters extracted from a voice of a drunken driver and that of a sober driver. For example, the parameter of a vowel sound 'a' spoken by a sober driver in accordance with the second degree $C_2$ is 0.538, but it is 0.082 in case of a drunken driver.

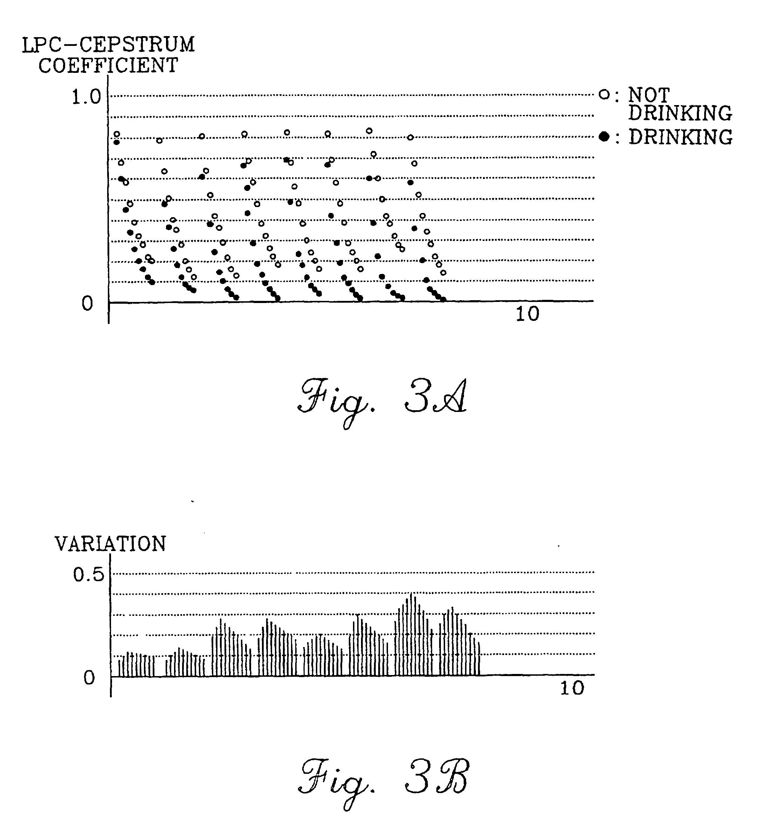

Figs. 3A and 3B are graphs for illustrating a distribution of parameters of voice sounds as pronounced in the cases of drinking and not drinking. The parameters indicated as a white circle come under the case of not drinking (sober) and those with a black circle come under the case of drinking.

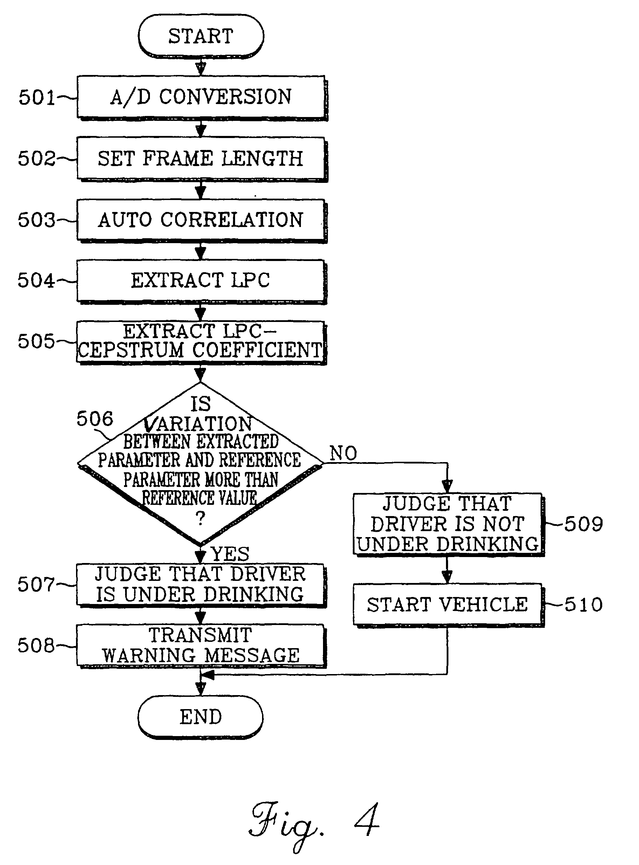

Referring to Figure 3A, it can be seen that the parameters in case of drinking are altered remarkably in comparison with those the in case of not drinking. Referring to Figure 3B, the variation between the parameters in case of drinking and those in case of not drinking is always more than 0.1 at least. The theory of the said distribution of parameters was announced as a thesis, 'A comparison between a voice in case of drinking and that of not drinking' on the paper,vol no.6029 of ISCIE (Institute of Systems Control and Information Engineer) on March 19,1993 by the inventor. Referring to Figure 4, a word or sound (Example 'start') pronounced by a driver is sent through a microphone 102 to the voice input unit 104. The voice input unit 104 converts an analog voice signal to a 12-bit digital voice signal at, for instance, a 1KHz sampling rate at step 501.

The parameter extractor 106 sets a length of frame for processing the digital voice signal from the voice input unit 104, and performs an auto correlation operation on the digital voice signal by the length of frame set forth at step 503. The parameter extractor 106 extracts an LPC from the digital voice signal processed by an auto correlation at step 504 and produces an LPC-cepstrum coefficient as a parameter after producing a cepstrum coefficient at step 505. Afterwards the comparator 110 calculates a variation by comparing the parameter from the parameter extractor 106 with the reference parameter set forth and stored in the reference parameter & voice storing circuit 108. The drinking judgement circuit 112 clarifies whether the variation is more than a reference value(Example;0.1) or not at step 506. In case of the variation being more than the reference value, the drinking judgement circuit 112 sends a code denoting that the driver has been judged to have been drinking to a voice synthesizer 116 at step 507.

Thereafter the voice synthesizer 116 sends a warning message not to drive through a speaker 118 by synthesizing the voice stored in the reference parameter & voice storing circuit 108 at step 508. And, in cases where the variation is not more than the reference value, the drinking judgement circuit 112 sends a code denoting that the driver has been judged not to have been drinking at step 509. Lastly in step 510, a start controller 114 starts a vehicle, corresponding to a result of the judgement so as to enable the vehicle to run.

Whilst the present invention has been specifically disclosed in relation to judging whether or not a person has been drinking, it will be appreciated that the method may extend to detecting other forms of intoxication (for instance by drugs) or for detecting other conditions such as profound tiredness. Such other conditions or forms of intoxication may also affect the ability to drive.

**Claims**

1. A control device for controlling the starting of a vehicle, **characterized by** starting a vehicle or shutting off a vehicle from starting according to the result of analyzing the sound of a driver issued voice command to judge whether the driver is in a fit to drive condition.

2. The control device as defined in claim 1, **characterized in that** said device prevents a vehicle from starting and simultaneously sends a warning message to a driver in cases where a driver is judged as not being in a fit state to drive.

3. The control device of claim 1 or 2, wherein the voice command is analyzed to judge whether the driver has been drinking.

4. The control device for controlling the starting of a vehicle by means of a driver issued voice command according to any of claims 1 to 3, the device comprising:

    a parameter extractor (106) for producing a parameter corresponding to a linear prediction coefficient-cepstrum coefficient extracted from a digital signal obtained by converting the sound of said voice command;

    a decision circuit (110, 108, 112) for comparing said parameter with a reference parameter obtained from the voice of said driver when in a fit to drive condition so as to decide whether said driver is fit to drive or not; and

    a controller (114) for starting or not according to whether said driver is determined to be fit to drive.

5. The control device as defined in any of the preceding claims, further including a warning message sender (116) for giving a warning to said driver in case of said driver being found to be in an unfit to drive condition.

6. The control device as defined in Claim 4 or claim 5 as dependant thereon, **characterized in that** said parameter extractor (106) generates said linear prediction coefficient-cepstrum coefficient after producing a linear prediction coefficient by taking an auto-correlation on the digital voice signal.

7. The control device as defined in Claim 4, or claims 5 or 6 as dependant thereon, **characterized in that** said decision circuit (110, 108, 112) sends a code representing the result of the comparison to said controller (114) or to said warning message sender (116).

8. The control device as defined in Claim 7, **characterized in that** said decision circuit (108, 110, 112) comprises a comparator (110) for comparing said parameter with a reference parameter obtained from the voice of said driver when in a state fit to drive to generate a difference signal representing a deviation, and a code sender (112) for sending a code to said warning message sender (116) or controller (114) according to whether said deviation is above a reference value or not.

9. The control device as defined in Claim 7 or 8, **characterized in that** said warning message sender (116) comprises a voice synthesizer for synthesizing a voiced warning in response to a code representing that the said driver is drunk, and a speaker (118) for giving out said voiced warning.

10. A device for sensing whether or not a driver is in a fit state by analyzing a driver's voice command, the device comprising:

    a parameter extractor (106) for producing a parameter corresponding to a linear prediction coefficient-cepstrum coefficient extracted from a digital signal obtained by converting the sound of said voice command;

    a storage means (108) for storing a reference parameter extracted from the voice of said driver when said driver is in a fit condition;

    a comparator (110) for comparing a current parameter extracted by said extractor (106) with said reference parameter so as to produce a difference signal representing the deviation; and

    a decision circuit (112) for determining said driver to be in a fit state or not according to whether said deviation is above a reference value or not.

11. The device as defined in Claim 10, **characterized in that** said parameter extractor generates (106) said linear prediction coefficient-cepstrum coefficient after producing a linear prediction coefficient by taking an auto-correlation on the digital voice signal.

12. The device according to any of the preceding claim; 10-11, wherein the device detects whether or not the driver has been drinking.

**Patentansprüche**

1. Steuervorrichtung zum Steuern des Startens eines Fahrzeugs, **dadurch gekennzeichnet, dass** ein Fahrzeug entsprechend dem Ergebnis des Analysierens des Klangs eines vom Fahrer erteilten Sprachbefehls, das dazu dient, festzustellen, ob der Fahrer in einem fahrtüchtigen Zustand ist, gestartet oder am Starten gehindert wird.

2. Steuervorrichtung nach Anspruch 1, **dadurch gekennzeichnet, dass** die Vorrichtung in Fällen, in denen festgestellt wird, dass ein Fahrer nicht in einem fahrtüchtigen Zustand ist, ein Fahrzeug am Starten hindert und gleichzeitig eine Warnmeldung an einen Fahrer sendet.

3. Steuervorrichtung nach Anspruch 1 oder 2, wobei der Sprachbefehl analysiert wird, um festzustellen, ob der Fahrer getrunken hat.

4. Steuervorrichtung zum Steuern des Startens eines Fahrzeugs mittels eines vom Fahrer erteilten Sprachbefehls nach einem der Ansprüche 1 bis 3, wobei die Vorrichtung umfasst:

   eine Parameter-Extrahiereinrichtung (106), die einen Parameter erzeugt, der einem LPC-Cepstrum-Koeffizienten entspricht, der aus einem digitalen Signal extrahiert wird, das durch Umwandeln des Schalls des Sprachbefehls gewonnen wird;

   eine Entscheidungsschaltung (110, 108, 112), die den Parameter mit einem Bezugsparameter vergleicht, der aus der Stimme des Fahrers in einem fahrtüchtigen Zustand gewonnen wurde, um zu entscheiden, ob der Fahrer fahrtüchtig ist oder nicht; und

   eine Steuerung (114), die in Abhängigkeit davon, ob festgestellt wird, dass der Fahrer fahrtüchtig ist, startet oder nicht.

5. Steuervorrichtung nach einem der vorangehenden Ansprüche, die des Weiteren einen Warnmeldungssender (116) enthält, der eine Warnung an den Fahrer ausgibt, wenn sich herausstellt, dass der Fahrer in einem fahruntüchtigen Zustand ist.

6. Steuervorrichtung nach Anspruch 4 oder Anspruch 5, wenn davon abhängig, **dadurch gekennzeichnet, dass** die Parameter-Extrahiereinrichtung (106) den LPC-Cepstrum-Koeffizienten nach der Erzeugung eines LPC (linear prediction coefficient) mittels einer Autokorrelation des digitalen Sprachsignals erzeugt.

7. Steuervorrichtung nach Anspruch 4 oder den Ansprüchen 5 oder 6, wenn davon abhängig, **dadurch gekennzeichnet, dass** die Entscheidungsschaltung (110, 108, 112) einen Code, der das Ergebnis des Vergleichs darstellt, an die Steuerung (114) oder an den Warnmeldungs-Sender (116) sendet.

8. Steuervorrichtung nach Anspruch 7, **dadurch gekennzeichnet, dass** die Entscheidungsschaltung (108, 110, 112) einen Komparator (110), der den Parameter mit einem Bezugsparameter vergleicht, der aus der Stimme des Fahrers in einem fahrtüchtigen Zustand gewonnen wurde, um ein Differenzsignal zu erzeugen, das eine Abweichung darstellt, sowie einen Code-Sender (112) umfasst, der, je nachdem, ob die Abweichung über einem Bezugswert liegt oder nicht, einen Code an den Warnmeldungssender (116) oder die Steuerung (114) sendet.

9. Steuervorrichtung nach Anspruch 7 oder 8, **dadurch gekennzeichnet, dass** der Warnmeldungssender (116) einen Sprachsynthesizer, der eine gesprochene Warnung in Reaktion auf einen Code synthetisiert, der anzeigt, dass der Fahrer betrunken ist, und einen Lautsprecher (118) umfasst, der die gesprochene Warnung ausgibt.

10. Vorrichtung, die erfasst, ob ein Fahrer in einem fahrtüchtigen Zustand ist oder nicht, indem sie einen Sprachbefehl des Fahrers analysiert, wobei die Vorrichtung umfasst:

   eine Parameter-Extrahiereinrichtung (106), die einen Parameter erzeugt, der einem LPC-Cepstrum-Koeffizienten entspricht, der aus einem digitalen Signal extrahiert wird, das durch Umwandeln des Schalls des Sprachbefehls gewonnen wird;

   eine Speichereinrichtung (108), die einen Bezugsparameter speichert, der aus der Stimme des Fahrers extrahiert wird, wenn der Fahrer in einem fahrtüchtigen Zustand ist;

einen Komparator (110), der einen aktuellen Parameter, der von der Extrahiereinrichtung (106) extrahiert wird, mit dem Bezugsparameter vergleicht, um ein Differenzsignal zu erzeugen, das die Abweichung darstellt; und

eine Entscheidungsschaltung (112), die, je nachdem, ob die Abweichung über einem Bezugswert liegt oder nicht, bestimmt, dass der Fahrer in einem fahrtüchtigen Zustand ist oder nicht.

11. Vorrichtung nach Anspruch 10, **dadurch gekennzeichnet, dass** die Parameter-Extrahiereinrichtung (106) den LPC-Cepstrum-Koeffizienten nach der Erzeugung eines LPC mittels einer Autokorrelation des digitalen Sprachsignals erzeugt.

12. Vorrichtung nach einem der vorangehenden Ansprüche 10 - 11, wobei die Vorrichtung erfasst, ob der Fahrer getrunken hat oder nicht.

**Revendications**

1. Dispositif de commande pour commander le démarrage d'un véhicule, **caractérisé en ce qu'**on fait démarrer un véhicule ou on empêche le démarrage d'un véhicule conformément au résultat d'analyse du son d'un ordre vocal prononcé par un conducteur, pour juger si le conducteur est en état de conduire.

2. Dispositif de commande selon la revendication 1, **caractérisé en ce que** ce dispositif empêche un véhicule de démarrer et envoie simultanément un message d'avertissement à un conducteur dans des cas dans lesquels un conducteur est jugé ne pas être en état de conduire.

3. Dispositif de commande selon la revendication 1 ou 2, dans lequel l'ordre vocal est analysé pour juger si le conducteur a bu.

4. Dispositif de commande pour commander le démarrage d'un véhicule au moyen d'un ordre vocal donné par un conducteur selon l'une quelconque des revendications 1 à 3, le dispositif comprenant :

un extracteur de paramètre (106) pour produire un paramètre correspondant à un coefficient de cepstre de coefficient de prédiction linéaire extrait d'un signal numérique obtenu en convertissant le son de l'ordre vocal ;
un circuit de décision (110, 108, 112) pour comparer ce paramètre avec un paramètre de référence obtenu à partir de la voix du conducteur lorsqu'il est en état de conduire, de façon à décider si le conducteur est en état de conduire ou non ; et
une unité de commande (114) pour effectuer le démarrage ou non selon qu'il est déterminé que le conducteur est en état de conduire, ou non.

5. Dispositif de commande selon l'une quelconque des revendications précédentes, comprenant en outre un émetteur de message d'avertissement (116) pour donner un avertissement au conducteur dans le cas où il s'avère que le conducteur n'est pas en état de conduire.

6. Dispositif de commande selon la revendication 4 ou la revendication 5 lorsqu'elle lui est rattachée, **caractérisé en ce que** l'extracteur de paramètre (106) génère le coefficient de cepstre de coefficient de prédiction linéaire après avoir produit un coefficient de prédiction linéaire en déterminant une autocorrélation sur le signal vocal numérique.

7. Dispositif de commande selon la revendication 4, ou les revendications 5 ou 6 lorsqu'elles en dépendent, **caractérisé en ce que** le circuit de décision (108, 110, 112) envoie un code représentant le résultat de la comparaison à l'unité de commande (114) ou à l'émetteur de message d'avertissement (116).

8. Dispositif de commande selon la revendication 7, **caractérisé en ce que** le circuit de décision (108, 110, 112) comprend un comparateur (110) pour comparer le paramètre avec un paramètre de référence obtenu à partir de la voix du conducteur lorsqu'il est en état de conduire, pour générer un signal de différence représentant un écart, et un émetteur de code (112) pour envoyer un code à l'émetteur de message d'avertissement (116) ou à l'unité de commande (114), selon que cet écart est supérieur ou non à une valeur de référence.

9. Dispositif de commande selon la revendication 7 ou 8, **caractérisé en ce que** l'émetteur de message d'avertissement (116) comprend un synthétiseur vocal pour synthétiser un avertissement vocal en réponse à un code représentant le fait que le conducteur est ivre, et un haut-parleur (118) pour émettre cet avertissement vocal.

10. Dispositif pour détecter si un conducteur est en état de conduire en analysant un ordre vocal du conducteur, le dispositif comprenant :

un extracteur de paramètre (106) pour produire un paramètre correspondant à un coefficient de cepstre de coefficient de prédiction linéaire extrait d'un signal numérique obtenu en convertissant le son de cet ordre vocal ;

un moyen de stockage (108) pour stocker un paramètre de référence extrait de la voix du conducteur lorsque le conducteur est en état de conduire ;

un comparateur (110) pour comparer un paramètre présent extrait par l'extracteur (106) avec le paramètre de référence, de façon à produire un signal de différence représentant l'écart ; et

un circuit de décision (112) pour déterminer si le conducteur est en état de conduire ou non, selon que l'écart est supérieur à une valeur de référence ou non.

11. Dispositif selon la revendication 10, **caractérisé en ce que** l'extracteur de paramètre génère (106) le coefficient de cepstre de coefficient de prédiction linéaire après avoir produit un coefficient de prédiction linéaire en déterminant une autocorrélation sur le signal vocal numérique.

12. Dispositif selon l'une quelconque des revendications 10 et 11 précédentes, dans lequel le dispositif détecte si le conducteur a bu ou non.

*Fig. 1*

|          | A     | I     | U     | E     | O     |
|----------|-------|-------|-------|-------|-------|
| $C_1$    | 0.00  | 0.00  | 0.00  | 0.00  | 0.00  |
| $C_2$    | 0.538 | 0.256 | 0.046 | 0.135 | 0.071 |
| $C_3$    | 0.086 | 0.312 | 0.088 | 0.206 | 0.121 |
| $C_4$    | 0.110 | 0.323 | 0.132 | 0.237 | 0.159 |
| $C_5$    | 0.126 | 0.322 | 0.178 | 0.249 | 0.190 |
| $C_6$    | 0.126 | 0.320 | 0.202 | 0.259 | 0.207 |
| $C_7$    | 0.130 | 0.312 | 0.231 | 0.271 | 0.216 |
| $C_8$    | 0.130 | 0.305 | 0.267 | 0.279 | 0.214 |
| $C_9$    | 0.124 | 0.296 | 0.303 | 0.272 | 0.210 |
| $C_{10}$ | 0.126 | 0.289 | 0.345 | 0.262 | 0.206 |

*Fig. 2A*

|          | A     | I     | U     | E     | O     |
|----------|-------|-------|-------|-------|-------|
| $C_1$    | 0.00  | 0.00  | 0.00  | 0.00  | 0.00  |
| $C_2$    | 0.082 | 0.169 | 0.095 | 0.110 | 0.090 |
| $C_3$    | 0.139 | 0.255 | 0.200 | 0.185 | 0.151 |
| $C_4$    | 0.177 | 0.302 | 0.253 | 0.286 | 0.199 |
| $C_5$    | 0.193 | 0.317 | 0.335 | 0.275 | 0.234 |
| $C_6$    | 0.204 | 0.336 | 0.404 | 0.308 | 0.260 |
| $C_7$    | 0.212 | 0.355 | 0.500 | 0.337 | 0.284 |
| $C_8$    | 0.232 | 0.369 | 0.600 | 0.363 | 0.316 |
| $C_9$    | 0.248 | 0.389 | 0.727 | 0.392 | 0.351 |
| $C_{10}$ | 0.239 | 0.422 | 0.888 | 0.430 | 0.374 |

Fig. 2B

LPC−CEPSTRUM
COEFFICIENT

○ : NOT
DRINKING
● : DRINKING

*Fig. 3A*

VARIATION

*Fig. 3B*

START

501 — A/D CONVERSION

502 — SET FRAME LENGTH

503 — AUTO CORRELATION

504 — EXTRACT LPC

505 — EXTRACT LPC-CEPSTRUM COEFFICIENT

506 — IS VARIATION BETWEEN EXTRACTED PARAMETER AND REFERENCE PARAMETER MORE THAN REFERENCE VALUE ?

NO →

YES

507 — JUDGE THAT DRIVER IS UNDER DRINKING

508 — TRANSMIT WARNING MESSAGE

509 — JUDGE THAT DRIVER IS NOT UNDER DRINKING

510 — START VEHICLE

END

*Fig. 4*